# EUROPÄISCHE PATENTANMELDUNG

(11) **EP 3 219 591 A1**
(43) Veröffentlichungstag der Anmeldung: **20.09.2017**
(21) Anmeldenummer: 17000327.1
(22) Anmeldetag: 02.03.2017
(51) Int. Cl.: B62H 1/02, B62K 19/30, B62K 25/02

(54) **ANORDNUNG ZUR AUFNAHME EINER HINTERRADACHSE**

(30) Priorität: 15.03.2016 DE 102016003102
(71) Anmelder: Carbon Rotec GmbH & Co. KG, 27809 Lemwerder (DE)
(72) Erfinder: Geißler, Andreas, 26169 Friesoythe (DE)
(74) Vertreter: Heiland, Karsten

(57) **Zusammenfassung**

Die Erfindung betrifft eine Anordnung zur Aufnahme einer Hinterradachse, mit einem Ausfallende (13) und einem relativ zu einer Kettenstrebe (11) bewegbaren Schlitten (15). Erfindungsgemäß ist der Schlitten (15) innerhalb der in diesem Bereich hohlen Kettenstrebe (11) verschiebbar angeordnet, während das Ausfallende (13) außerhalb der Kettenstrebe vorgesehen ist und Schlitten und Ausfallende durch wenigstens eine Öffnung (17) der Kettenstrebe miteinander verbunden sind.

## Beschreibung

Die Erfindung betrifft eine Anordnung zur Aufnahme einer Hinterradachse, mit einem Ausfallende und einem relativ zu einer Kettenstrebe bewegbaren Schlitten. Daneben betrifft die Erfindung einen Fahrradrahmen und ein Fahrrad.

Unter dem Begriff "Fahrrad" werden hier neben den rein muskelkraftgetriebenen Fahrrädern auch Fahrräder mit Motor oder Hilfsmotor, Elektro-Fahrräder sowie alle Fahrräder mit Ketten- oder Riementrieb, unabhängig von der Antriebsenergie, verstanden.

Ein typischer Fahrradrahmen weist in seinem hinteren Bereich eine im Wesentlichen waagerechte Kettenstrebe auf, die an ihrem hinteren Ende mit einer zum Sattelrohr führenden Sitzstrebe verbunden ist. Im Bereich der Verbindung von Sitzstrebe und Kettenstrebe ist ein sogenanntes Ausfallende vorgesehen, mit einer Achsaufnahme für die Achse des Hinterrades. Das Ausfallende kann relativ zur Kettenstrebe feststehend oder verstellbar angeordnet sein. Zur besseren Anpassung von Kettenspannung oder Riemenspannung ist unter anderem ein in Längsrichtung des Fahrrades verstellbares Ausfallende bekannt.

Ein in Längsrichtung verstellbares Ausfallende zeigt die CH 700 148 B1 (entspricht DE 20 2009 015 815 U1). Ein Schlitten mit nach unten offener Achsaufnahme ist an der jeweiligen Kettenstrebe längsverschieblich gehalten und justierbar.

Fahrräder mit Rahmen aus Stahl sind relativ schwer. Bekannt sind Fahrräder aus Leichtmetall. Besonders leichte und hochwertige Fahrräder werden auch schon unter Verwendung von Faserverbundwerkstoffen hergestellt. Rahmenteile, wie Rohre und Streben, aus Faserverbundwerkstoffen weisen andere mechanische Belastungsgrenzen auf als Rahmenteile aus Stahl oder Leichtmetall. Begrenzt ist die Fähigkeit zur Aufnahme von bestimmten Querkräften, während Kräfte in Längsrichtung der Streben oder Rohre gut aufgenommen werden können.

Aufgabe der vorliegenden Erfindung ist die Schaffung einer neuen Anordnung zur Aufnahme einer Hinterradachse, insbesondere für eine Kettenstrebe aus Faserverbundwerkstoff.

Zur Lösung der Aufgabe weist die erfindungsgemäße Anordnung die Merkmale des Anspruchs 1 auf. Insbesondere ist der Schlitten innerhalb der in diesem Bereich hohlen Kettenstrebe verschiebbar angeordnet, während das Ausfallende außerhalb der Kettenstrebe vorgesehen ist, wobei Schlitten und Ausfallende durch wenigstens eine Öffnung in der Kettenstrebe miteinander verbunden sind. Die Achsaufnahme für die Hinterradachse ist Bestandteil des Ausfallendes. Das Ausfallende ist am Schlitten gehalten. Der Schlitten kann durch seine Positionierung innerhalb der Kettenstrebe die auf das Ausfallende wirkenden Kräfte optimal in die Kettenstrebe einleiten. Vorzugsweise sind ein Innenquerschnitt der Kettenstrebe und ein Außenquerschnitt des Schlittens so aneinander angepasst, dass der Schlitten mit nur geringem oder ohne Querspiel innerhalb der Kettenstrebe in Längsrichtung bewegbar ist.

Nach einem weiteren Gedanken der Erfindung ist wenigstens ein Verbindungsorgan zur insbesondere lösbaren Verbindung von Schlitten und Ausfallende vorgesehen. Dadurch können Schlitten und Ausfallende bei der Montage und/oder zu Wartungszwecken voneinander getrennt werden. Vorteilhafterweise sind zwei oder mehr Verbindungsorgane vorgesehen.

Nach einem weiteren Gedanken der Erfindung ist wenigstens ein Verbindungsorgan zur Verbindung von Schlitten und Ausfallende derart vorgesehen, dass in einer Klemmposition Schlitten und Ausfallende zueinander gezogen werden und insbesondere an einer Wandung der Kettenstrebe anliegen. Die Wandung wird dabei zwischen Schlitten und Ausfallende eingeklemmt, sodass Schlitten und Ausfallende nicht mehr bewegbar sind. Vorzugsweise sind zwei oder mehr Verbindungsorgane vorgesehen, insbesondere in Längsrichtung des Schlittens nebeneinander.

Nach einem weiteren Gedanken der Erfindung weist die Kettenstrebe wenigstens eine Öffnung, vorzugsweise ein Langloch zum Durchtritt des oder der Verbindungsorgane auf. Insbesondere sind zwei Langlöcher in Längsrichtung aufeinanderfolgend und zwei Verbindungsorgane vorgesehen.

Nach einem weiteren Gedanken der Erfindung ist als Verbindungsorgan eine Schraube vorgesehen, insbesondere mit einem (vertikalen) Gewinde im Schlitten und einer Bohrung im Ausfallende zum Durchtritt der Schraube. Dies ermöglicht eine einfache Fixierung von Schlitten und Ausfallende in der genannten Klemmposition.

Nach einem weiteren Gedanken der Erfindung ist ein Haltestück am freien Ende der Kettenstrebe vorgesehen, wobei das Haltestück mit dem Schlitten insbesondere durch ein Verstellorgan verbunden ist. Das Haltestück kann die Position des Schlittens in der Kettenstrebe sichern oder die Positionierung erleichtern.

Nach einem weiteren Gedanken der Erfindung ist das Haltestück eine Abdeckplatte und reicht insbesondere mit einem Teilbereich in das Ende der Kettenstrebe hinein. Die Abdeckplatte deckt das freie Ende der Kettenstrebe ab und schützt so vor dem Eindringen von Schmutz.

Nach einem weiteren Gedanken der Erfindung ist das Verstellorgan (für den Schlitten) eine Stellschraube, die in einem horizontalen Gewinde des Schlittens sitzt und die durch eine Bohrung im Haltestück hindurchtritt. Das Gewinde ist horizontal gerichtet, also in Längsrichtung ausgerichtet. Ein Kopf der Stellschraube liegt außen auf dem Haltestück auf und kann dort von einem passenden Werkzeug gedreht werden.

Nach einem weiteren Gedanken der Erfindung sind Haltestück und freies Ende der Kettenstrebe so passend zueinander ausgebildet, dass das Haltestück auf das freie Ende aufsteckbar oder zumindest teilweise in das freie Ende einsteckbar ist. Dies erleichtert die Montage und verbessert auch die Krafteinleitung am freien Ende der Kettenstrebe.

Nach einem weiteren Gedanken der Erfindung greifen das Haltestück bzw. ein Teilbereich desselben und das freie Ende derart ineinander und sind derart ausgebildet, dass sie relativ zueinander nicht verdrehbar sind. Insbesondere weisen das freie Ende und das Haltestück zueinander passende polygonale Querschnitte auf, beispielsweise trapezförmige Querschnitte. Auch sind die Abmessungen aufeinander abgestimmt, sodass Haltestück und freies Ende nahezu spielfrei ineinandergreifen. Auch dies verbessert die Krafteinleitung in das freie Ende.

Nach einem weiteren Gedanken der Erfindung ist das Haltestück durch ein Halteorgan gegen Verdrehen oder Lösen gesichert, insbesondere an der Kettenstrebe oder einer benachbarten Strebe. Dadurch wird die Montage des Haltestücks erleichtert. Das Haltestück kann zunächst mit dem Halteorgan an einer Strebe gesichert werden, bevor durch das Verstellorgan eine Verbindung zum Schlitten hergestellt wird.

Nach einem weiteren Gedanken der Erfindung ist das Halteorgan eine Halteschraube, die durch eine Bohrung im Haltestück hindurchtritt. Im Material der Kettenstrebe oder einer anderen Strebe oder in einem Übergangsbereich der Strebe ist ein Gewinde zur Aufnahme der Halteschraube vorgesehen.

Nach einem weiteren Gedanken der Erfindung ist das Ausfallende mit einer Bremsenaufnahme versehen. Das Ausfallende beinhaltet dann die Achsaufnahme und die Bremsenaufnahme. Dadurch ist stets eine korrekte Position der Bremse zur Achse gewährleistet, auch bei Verstellung des Ausfallendes relativ zum Rahmen.

Nach einem weiteren Gedanken der Erfindung ist das Ausfallende mit einer Ständeraufnahme versehen, insbesondere mit einer Anlagefläche und wenigstens einer Bohrung. Ein Fahrradständer wird auf diese Weise mit dem Ausfallende verbunden und nicht direkt mit den Streben oder Rohren des Rahmens. Auch dies verbessert die Einleitung von Kräften in den Rahmen.

Nach einem weiteren Gedanken der Erfindung ist der Schlitten mit wenigstens einer Bohrung korrespondierend zu einer Bohrung in der Ständeraufnahme versehen. Die Bohrung im Schlitten ist insbesondere als Innengewinde ausgebildet. Vorzugsweise sind zwei Bohrungen bzw. Innengewinde an dieser Stelle vorgesehen.

Nach einem weiteren Gedanken der Erfindung weist die Kettenstrebe wenigstens eine Öffnung, vorzugsweise ein Langloch zum Durchtritt eines Verbindungsorgans für eine Verbindung von Schlitten und Ständeraufnahme auf. Dabei kann zwischen Ständeraufnahme und Kettenstrebe noch ein Teil des Ausfallendes gehalten sein. Vorzugsweise ist als Verbindungsorgan wenigstens eine Schraube vorgesehen, die beispielsweise in einem Innengewinde des Schlittens gehalten ist.

Nach einem weiteren Gedanken der Erfindung sind Ausfallende und/oder Schlitten aus Metall, insbesondere Leichtmetall gefertigt. Die Kettenstrebe kann aus Faserverbundwerkstoff bestehen, zumindest der zur Verbindung mit dem Ausfallende vorgesehenen Bereich. Alternativ kann die Kettenstrebe aus Metall oder einem anderen Werkstoff hergestellt sein.

Gegenstand der Erfindung ist auch ein Fahrradrahmen, insbesondere mit einer Kettenstrebe aus Faserverbundwerkstoff, mit einer voranstehend beschriebenen Anordnung. Der Fahrradrahmen kann auch insgesamt oder überwiegend aus Faserverbundwerkstoff bestehen.

Gegenstand der Erfindung ist schließlich auch ein Fahrrad mit einem Fahrradrahmen, wie voranstehend beschrieben, insbesondere mit einer Kettenstrebe aus Faserverbundwerkstoff, mit einer Anordnung entsprechend den voranstehenden Ausführungen.

Weitere Merkmale der Erfindung ergeben sich aus der Beschreibung im Übrigen und aus den Ansprüchen. Vorteilhafte Ausführungsformen der Erfindung werden nachfolgend anhand von Zeichnungen näher erläutert. Es zeigen:
- Fig. 1: eine auseinandergezogene Darstellung eines Ausfallendes zur Verbindung mit einer Kettenstrebe auf der rechten Seite eines Fahrrades,
- Fig. 2: ein Ausfallende für eine linksseitige Kettenstrebe,
- Fig. 3: einen Längsschnitt durch einen Teil der Anordnung gemäß Fig. 2.

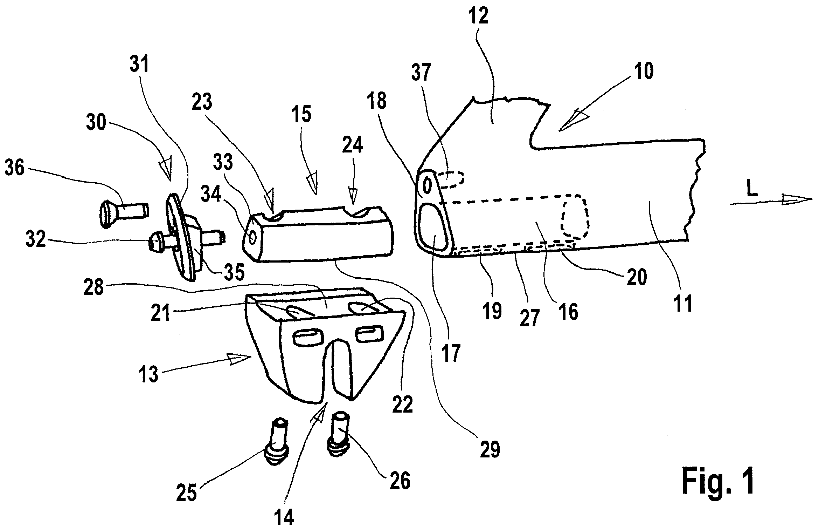

Es wird zunächst Bezug genommen auf Fig. 1. Gezeigt ist ein Verbindungsbereich 10 von Kettenstrebe 11 und Sitzstrebe 12 eines nicht näher dargestellten Fahrrades, nämlich auf der rechten Seite desselben. Dem Verbindungsbereich 10 zugeordnet ist ein Ausfallende 13 mit einer abwärts gerichteten Achsaufnahme 14. Das Ausfallende 13 ist klemmend mit der Kettenstrebe 11 im Verbindungsbereich 10 verbunden. Hierzu ist ein Schlitten 15 vorgesehen, welcher in Längsrichtung L in eine passende Aufnahme 16 der Kettenstrebe einschiebbar ist. Durch die Aufnahme 16 ist die Kettenstrebe 11 zumindest in diesem Bereich hohl ausgebildet. Eine Öffnung 17 der Aufnahme 16 ist von einer Anlagefläche 18 umgeben. Öffnung 17 und Anlagefläche 18 bilden eine Stirnseite der Kettenstrebe 11.

Die Kettenstrebe 11 weist unterhalb der Aufnahme 16 zwei Langlöcher 19, 20 auf. Hierzu korrespondierend weist das Ausfallende 13 zwei vertikal gerichtete Bohrungen 21, 22 auf. Entsprechend ist der Schlitten 15 mit zwei Innengewinden 23, 24 versehen, welche zur Aufnahme von Halteschrauben 25, 26 dienen. Deren Gewinde werden von unten durch die Bohrungen 21, 22 und durch die Langlöcher 19, 20 bis in die Innengewinde 23, 24 geführt und dort verschraubt. Schraubenköpfe der Halteschrauben 25, 26 bewirken einen klemmenden Sitz von Ausfallende 13 und Schlitten 15 an einer Unterseite 27 der Kettenstrebe 11. Zur gleichmäßigen Verteilung der Kräfte sind eine Oberseite 28 des Ausfallendes 13 und eine Unterseite 29 des Schlittens 15 an die Kontur der Kettenstrebe 11 bzw. der Aufnahme 16 in diesem Bereich angepasst.

Ausfallende 13 und Schlitten 15 bestehen vorzugsweise aus einem metallischen Werkstoff, während die Kettenstrebe 11 bzw. der Verbindungsbereich 10 vorzugsweise aus einem Faserverbundwerkstoff hergestellt ist.

Der Schlitten 15 ist von hinten, also durch die Öffnung 17 in die Kettenstrebe 11 einzuführen. Bei in die Achsaufnahme 14 eingesetztem Hinterrad, welches durch einen Kettentrieb oder Riementrieb bewegt wird, besteht eine Zugkraft in Längsrichtung L. Sinnvoll ist eine genaue Justierung der Position des Schlittens 15 in der Aufnahme 16. Hierzu ist eine Abdeckplatte 30 vorgesehen, welche mit einem umlaufenden Rand 31 auf der Anlagefläche 18 zu liegen kommt und mit einer Bohrung für eine Stellschraube 32 versehen ist. Der Schlitten 15 weist an seiner Stirnfläche 33 ein Innengewinde 34 zur Aufnahme eines Gewindes der Stellschraube 32 auf. Ein Kopf der Stellschraube 32 liegt außen auf der Abdeckplatte 30 an.

Die Abdeckplatte 30 ist innerhalb des umlaufenden Randes 31 mit einer in die Aufnahme 16 gerichteten Erhebung 35 versehen. Deren Außenkontur ist an die Innenkontur der Aufnahme 16 angepasst. Querschnitte von Außenkontur und Innenkontur sind im Wesentlichen polygonal gestaltet, vorzugsweise trapezförmig, ebenso der Querschnitt des Schlittens 15. Dadurch sind Rotationsbewegungen nahezu ausgeschlossen.

Als zusätzliche Verdrehsicherung und als Montagehilfe ist eine Halteschraube 36 vorgesehen, deren Gewinde durch eine Bohrung im umlaufenden Rand 31 in ein Innengewinde 37 in der Anlagefläche 18 geschraubt wird. Das Innengewinde 37 ist hier oberhalb der Öffnung 17 vorgesehen.

Bei der Montage des Ausfallendes 13 an der Kettenstrebe 11 wird zunächst der Schlitten 15 in die Aufnahme 16 eingeschoben, bis die Innengewinde 23, 24 über den Langlöchern 19, 20 positioniert sind. Anschließend wird das Ausfallende 13 von unten gegen die Langlöcher 19, 20 gehalten und die Halteschrauben 25, 26 durch die Bohrungen 21, 22 gesteckt und soweit angezogen, dass eine lose Verbindung zwischen Schlitten 15 und Ausfallende 13 besteht. Anschließend wird die Abdeckplatte 30 auf die Öffnung 17 gesetzt und die Halteschraube 36 in das Innengewinde 37 eingedreht. Danach wird die Stellschraube 32 in das Innengewinde 34 eingedreht. Dabei verändert sich die Position von Schlitten 15 und Ausfallende 13 bis in eine gewünschte Position. Schließlich werden die Halteschrauben 25, 26 scharf angezogen, vorzugsweise mit einem vorgegebenen, kontrollierten Drehmoment.

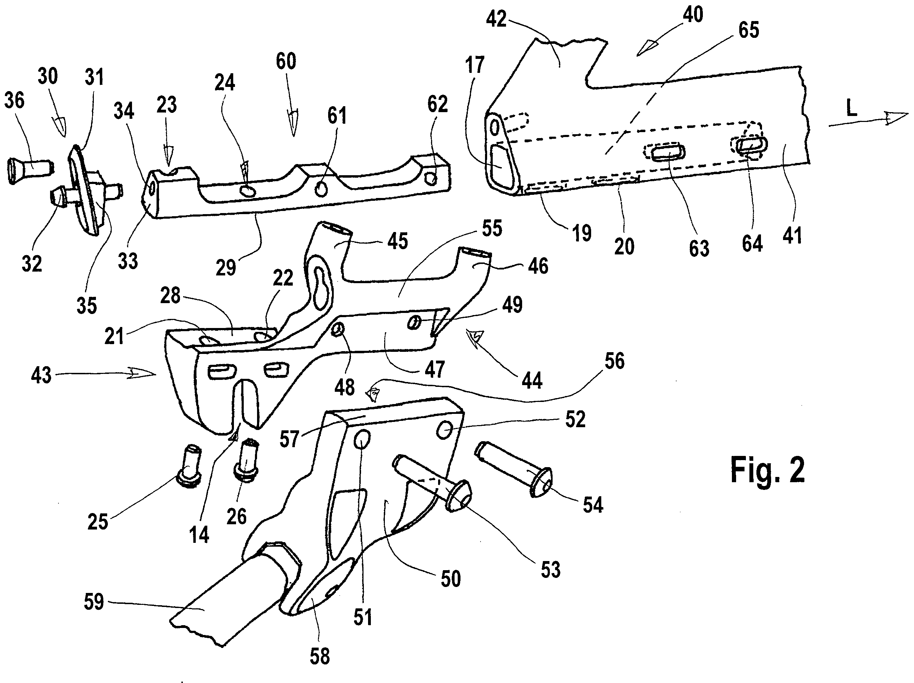

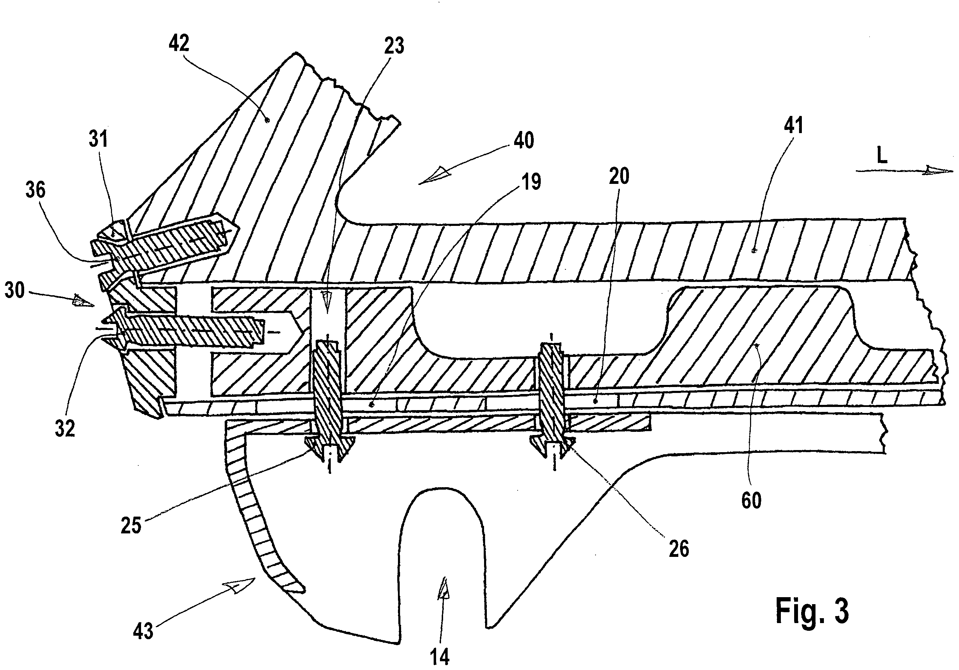

Die Fig. 2 und 3 zeigen einen linksseitigen Verbindungsbereich 40 mit Kettenstrebe 41 und Sitzstrebe 42. Soweit sinnvoll, sind die gleichen Bezugsziffern wie in Fig. 1 angegeben. Ein Ausfallende 43 ist ebenso gestaltet wie das Ausfallende 13, jedoch mit zusätzlichen Funktionen und weist an die Oberseite 28 angrenzend einen im Wesentlichen nach oben und in Längsrichtung L gerichteten Fortsatz 44 auf. Der Fortsatz 44 beinhaltet zwei aufwärts gerichtet Stutzen 45, 46 als Bremsenaufnahmen für einen nicht gezeigten Bremssattel einer Scheibenbremse, sowie eine Anlagefläche 47 mit Bohrungen 48, 49 zur Anlage und Befestigung eines Ständerkopfes 50. Dieser ist im Wesentlichen plattenförmig ausgebildet mit zwei Bohrungen 51, 52 nebeneinander und korrespondierend zu den Bohrungen 48, 49, zum Durchtritt von Halteschrauben 53, 54.

Die Anlagefläche 47 ist unterhalb der oder zwischen den Stutzen 45, 46 vorgesehen. Die Stutzen 45, 46 können Teil einer U-förmigen Gestaltung sein, mit einer Basis 55. Auch können sich die Stutzen 45, 46 nach unten und zugleich seitlich neben der Anlagefläche 47 ein Stück weit fortsetzen, sodass sich insgesamt eine H-förmige Gestaltung mit der Basis 55 in der Mitte ergibt.

Der Ständerkopf 50 weist eine zur Anlagefläche 47 korrespondierende Anlagefläche 56 auf (in Fig. 2 verdeckt). Eine obere Stirnseite 57 des Ständerkopfes 50 kann an einer Unterseite der Basis 55 anliegen, welche die Anlagefläche 47 nach oben begrenzt. An den Ständerkopf 50 schließt nach unten mit einem Gelenk 58 ein Ständer 59 an.

Im Ausführungsbeispiel der Fig. 2, 3 ist neben dem Ausfallende 43 auch ein Schlitten 60 in besonderer Weise ausgebildet. Dieser ist hier etwa doppelt so lang wie der Schlitten 15 in Fig. 1 und mit zwei zusätzlichen Innengewinden 61, 62 versehen, welche zur Aufnahme der Halteschrauben 53, 54 vorgesehen und entsprechend seitlich angeordnet sind. Hierzu passend weist die Kettenstrebe 41 seitlich zwei zusätzliche Langlöcher 63, 64 auf, in Längsrichtung L vor den nach unten gerichteten Langlöchern 19, 20. Eine Aufnahme 65 in der Kettenstrebe 41 ist an die größere Länge des Schlittens 60 angepasst. Fertig montiert ist somit der Schlitten 60 mindestens zweifach verschraubt, nämlich nach unten mit dem Ausfallende 43 und dessen Oberseite 28 und seitlich durch die Anlagefläche 47 hindurch mit dem Ständerkopf 50. Der Fortsatz 44 weist auf der Rückseite der Anlagefläche 47 eine nicht sichtbare Anlagefläche auf, die an die Außenkontur der Kettenstrebe 41 in diesem Bereich angepasst ist.

Der Schlitten 60 ist aus Gewichtsgründen möglichst flach ausgebildet. Lediglich im Bereich der Stellschraube 32, der Halteschraube 25 und der Halteschrauben 53, 54 ist der Schlitten 60 mit einem etwas dickeren Querschnitt ausgebildet und weist entsprechend in Fig. 2 an seiner Oberseite drei Erhöhungen und zwei Vertiefungen auf.

Die Montage des linksseitigen Ausfallendes 43 erfolgt ähnlich wie die Montage des rechtsseitigen Ausfallendes 13. Zusätzlich werden lediglich die Halteschrauben 53, 54 zunächst lose eingesetzt. Erst nach der Positionierung mittels der Stellschraube 32 werden die Halteschrauben 53, 54 fest angezogen.

**Bezugszeichenliste:**

| | | | |
|---|---|---|---|
| 10 | Verbindungsbereich | 42 | Sitzstrebe |
| 11 | Kettenstrebe | 43 | Ausfallende |
| 12 | Sitzstrebe | 44 | Fortsatz |
| 13 | Ausfallende | 45 | Stutzen |
| 14 | Achsaufnahme | 46 | Stutzen |
| 15 | Schlitten | 47 | Anlagefläche |
| 16 | Aufnahme | 48 | Bohrung |
| 17 | Öffnung | 49 | Bohrung |
| 18 | Anlagefläche | 50 | Ständerkopf |
| 19 | Langloch | 51 | Bohrung |
| 20 | Langloch | 52 | Bohrung |
| 21 | Bohrung | 53 | Halteschraube |
| 22 | Bohrung | 54 | Halteschraube |
| 23 | Innengewinde | 55 | Basis |
| 24 | Innengewinde | 56 | Anlagefläche |
| 25 | Halteschraube | 57 | Stirnfläche |
| 26 | Halteschraube | 58 | Gelenk |
| 27 | Unterseite | 59 | Ständer |
| 28 | Oberseite | 60 | Schlitten |
| 29 | Unterseite | 61 | Innengewinde |
| 30 | Abdeckplatte | 62 | Innengewinde |
| 31 | umlaufender Rand | 63 | Langloch |
| 32 | Stellschraube | 64 | Langloch |
| 33 | Stirnfläche | 65 | Aufnahme |
| 34 | Innengewinde | | |
| 35 | Erhebung | L | Längsrichtung |
| 36 | Halteschraube | | |
| 37 | Innengewinde | | |
| 38 | - | | |
| 39 | - | | |
| 40 | Verbindungsbereich | | |
| 41 | Kettenstrebe | | |

## Patentansprüche

1. Anordnung zur Aufnahme einer Hinterradachse, mit einem Ausfallende (13, 43) und einem relativ zu einer Kettenstrebe (11, 41) bewegbaren Schlitten (15, 60), **dadurch gekennzeichnet, dass** der Schlitten (15, 60) innerhalb der in diesem Bereich hohlen Kettenstrebe (11, 41) verschiebbar angeordnet ist, dass das Ausfallende (13, 43) außerhalb der Kettenstrebe vorgesehen ist, und dass Schlitten (15, 60) und Ausfallende (13, 43) durch wenigstens eine Öffnung in der Kettenstrebe (11, 41) miteinander verbunden sind.

2. Anordnung nach Anspruch 1, **gekennzeichnet durch** wenigstens ein Verbindungsorgan zur insbesondere lösbaren Verbindung von Schlitten (15, 60) und Ausfallende (13, 43).

3. Anordnung nach Anspruch 1 oder 2, **gekennzeichnet durch** wenigstens ein Verbindungsorgan zur Verbindung von Schlitten (15, 60) und Ausfallende (13, 43) derart, dass in einer Klemmposition Schlitten (15, 60) und Ausfallende (13, 43) zueinander gezogen werden und insbesondere an einer Wandung der Kettenstrebe (11, 41) anliegen.

4. Anordnung nach Anspruch 2 oder 3, **dadurch gekennzeichnet, dass** die Kettenstrebe (11, 41) wenigstens eine Öffnung, vorzugsweise ein Langloch (19, 20) zum Durchtritt des Verbindungsorgans aufweist.

5. Anordnung nach Anspruch 2 oder einem der weiteren Ansprüche, **dadurch gekennzeichnet, dass** als Verbindungsorgan eine Schraube (25, 26) vorgesehen ist, insbesondere mit einem Innengewinde (23, 24) im Schlitten und einer Bohrung (21, 22) im Ausfallende (13, 43) zum Durchtritt der Schraube (25, 26).

6. Anordnung nach Anspruch 1 oder einem der weiteren Ansprüche, **gekennzeichnet durch** ein Haltestück am freien Ende der Kettenstrebe (11, 41), wobei das Haltestück mit dem Schlitten (15, 60) insbesondere **durch** ein Verstellorgan verbunden ist.

7. Anordnung nach Anspruch 6, **dadurch gekennzeichnet, dass** das Haltestück eine Abdeckplatte (30) ist und insbesondere mit einem Teilbereich (Erhebung 35) in das Ende der Kettenstrebe (11, 41) hineinreicht.

8. Anordnung nach Anspruch 6 oder 7, **dadurch gekennzeichnet, dass** das Verstellorgan eine Stellschraube (32) ist, die in einem horizontalen/längsgerichteten Gewinde (34) des Schlittens (15, 60) sitzt und die durch eine Bohrung im Haltestück hindurchtritt.

9. Anordnung nach Anspruch 6 oder einem der weiteren Ansprüche, **dadurch gekennzeichnet, dass** Haltestück und freies Ende der Kettenstrebe (11, 41) so passend zueinander ausgebildet sind, dass das Haltestück auf das freie Ende aufsteckbar oder zumindest teilweise in das freie Ende einsteckbar ist.

10. Anordnung nach Anspruch 6 oder einem der weiteren Ansprüche, **dadurch gekennzeichnet, dass** Haltestück und freies Ende derart ineinandergreifen und derart ausgebildet sind, dass sie relativ zueinander nicht verdrehbar sind.

11. Anordnung nach Anspruch 6 oder einem der weiteren Ansprüche, **dadurch gekennzeichnet, dass** das Haltestück durch ein Halteorgan gegen Verdrehen oder Lösen gesichert ist, insbesondere an der Kettenstrebe (11, 41) oder einer benachbarten Strebe (Sitzstrebe 12, 42).

12. Anordnung nach Anspruch 11, **dadurch gekennzeichnet, dass** das Halteorgan eine Halteschraube (36) ist, die durch eine Bohrung im Haltestück hindurchtritt.

13. Anordnung nach Anspruch 1 oder einem der weiteren Ansprüche, **dadurch gekennzeichnet, dass** das Ausfallende (13, 43) mit einer Bremsenaufnahme versehen ist.

14. Anordnung nach Anspruch 1 oder einem der weiteren Ansprüche, **dadurch gekennzeichnet, dass** das Ausfallende (13, 43) mit einer Ständeraufnahme versehen ist, insbesondere mit einer Anlagefläche (47) und wenigstens einer Bohrung (49, 49).

15. Anordnung nach Anspruch 14, **dadurch gekennzeichnet, dass** der Schlitten (60) mit wenigstens einer Bohrung (61, 62) korrespondierend zu einer Bohrung (48, 49) versehen ist.

16. Anordnung nach Anspruch 14 oder 15, **dadurch gekennzeichnet, dass** die Kettenstrebe (41) wenigstens eine Öffnung, vorzugsweise ein Langloch (63, 64) zum Durchtritt eines Verbindungsorgans für eine Verbindung von Schlitten (60) und Ständeraufnahme aufweist.

17. Anordnung nach Anspruch 1 oder einem der weiteren Ansprüche, **dadurch gekennzeichnet**, das Ausfallende (13, 43) und/oder Schlitten (15, 60) aus Metall, insbesondere Leichtmetall gefertigt sind.

18. Fahrradrahmen, insbesondere mit einer Kettenstrebe (11, 41) aus Faserverbundwerkstoff, mit einer Anordnung nach einem der Ansprüche 1 bis 17.

19. Fahrrad, insbesondere mit einer Kettenstrebe (11, 41) aus Faserverbundwerkstoff, mit einer Anordnung nach einem der Ansprüche 1 bis 17.
